**Europäisches Patentamt**

**European Patent Office**

**Office européen des brevets**

(19)

(11) Publication number: **0 210 723 B1**

(12) # EUROPEAN PATENT SPECIFICATION

(45) Date of publication of patent specification: **10.04.91**  (51) Int. Cl.⁵: **G01N 29/00, A61B 8/00**

(21) Application number: **86303833.7**

(22) Date of filing: **20.05.86**

Divisional application 90104329.9 filed on 20/05/86.

(54) **Ultrasonic probe.**

(30) Priority: **20.05.85 JP 107355/85**
**20.05.85 JP 107356/85**
**23.07.85 JP 162404/85**

(43) Date of publication of application:
**04.02.87 Bulletin 87/06**

(45) Publication of the grant of the patent:
**10.04.91 Bulletin 91/15**

(84) Designated Contracting States:
**DE FR GB**

(56) References cited:
**EP-A- 0 025 092**
**GB-A- 2 035 010**
**US-A- 4 211 949**
**US-A- 4 326 418**
**US-A- 4 441 503**

(73) Proprietor: **MATSUSHITA ELECTRIC INDUSTRI-AL CO., LTD.**
**1006, Oaza Kadoma**
**Kadoma-shi, Osaka-fu, 571(JP)**

(72) Inventor: **Saito, Koetsu**
**4-8-1, Higashinakano Nakano-ku**
**Tokyo 164(JP)**
Inventor: **Kawabushi, Masami**
**2710-157, Mihocho Midori-ku**
**Yokohama, Kanagawa 226(JP)**

(74) Representative: **Crawford, Andrew Birkby et al**
**A.A. THORNTON & CO. Northumberland**
**House 303-306 High Holborn**
**London WC1V 7LE(GB)**

## Description

This invention relates to an ultrasonic probe used in an ultrasonic diagnostic apparatus for medical use.

It is a recent trend to use ultrasonic probes made of compound piezoelectric materials in the field of ultrasonic diagnostic apparatus for medical use and the like.

Such ultrasonic probes using compound piezoelectric materials have been proposed, including, for example the construction mentioned in Proc. IEEE Ultrasonic Symposium, 1984, by A. A. Shaulov et al at pages 545-548.

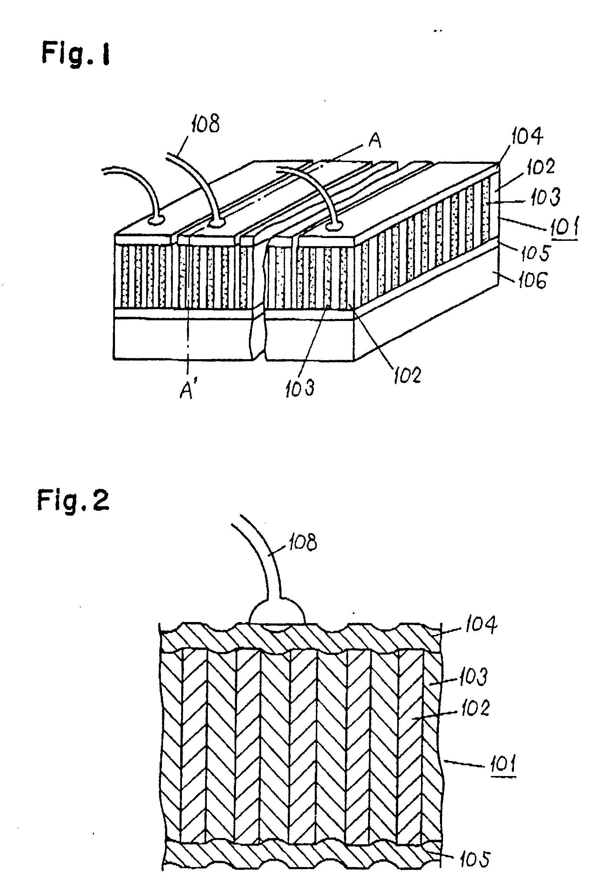

Referring now to Figs 1 and 2, a conventional array type ultrasonic probe using compound piezoelectric materials is described.

Fig. 1 is a perspective view showing the essential features of the probe, and Fig. 2 is a magnified sectional view of the portion connecting the lead wires thereof. Numeral 101 denotes a piezoelectric material which is composed of a piezoelectric ceramic material 102 extending in one dimension, and an organic polymer material 103 extending in three dimensions and surrounding said piezoelectric ceramic material 102. On one surface of this compound piezoelectric material 101, a plurality of electrodes 104 are disposed by vacuum evaporation by way of mask or the like, while a common electrode 105 is installed on the opposite surface of the compound piezoelectric material 101 by vacuum evaporation, and an acoustic matching layer 106 made of epoxy resin or the like is adhered to the common electrode 105 surface (the sound wave radiation surface) in order to lead the sound waves efficiently to the subject to be examined. To the individual electrodes 104, lead wires 108 are connected by wire bonding or similar means, and are in turn connected to electrical terminals (not shown).

Thus, by applying electrode signals, which are controlled externally to the electrodes 104, 105 at both surfaces of the compound piezoelectric material 101, ultrasonic waves may be radiated from the acoustic matching layer 106 surface.

In the compound piezoelectric material 101, the piezoelectric ceramic 102 is made of PZT, and the organic high polymer material 103 may be made of an epoxy resin or the like, and such a compound piezoelectric material 101 may, in electro-mechanical coupling coefficient, obtain a characteristic nearly equal to $K_{33}$, the electro-mechanical coupling coefficient of the piezoelectric ceramic 102, and may be lower in acoustic impedance as compared with that of piezoelectric ceramic alone (in the case of the PZT compound, it is about 20 to 35 $\times$ $10^5$ g/cm².s) For example, if, by the ratio by volume, 25% of the piezoelectric ceramic 102, and 75% of the organic polymer 103 of epoxy resin is used, the acoustic impedance is about 8 $\times$ $10^5$ g/cm².s, and its matching with the subject such as the human body (of which acoustic impedance is 1.5 to 1.8 $\times$ $10^5$ g/cm².s) is much better than in the case of piezoelectric ceramic alone, and only one layer of acoustic matching layer 106 is enough to improve the efficiency (sensitivity) of transmission and reception. Also since the piezoelectric ceramic 102 extends one-dimensionally only, leaks of sound waves to other elements (acoustic crosstalks) are few, which means that the orientation resolution is excellent.

Accordingly, the usefulness of ultrasonic probes using compound piezoelectric material 101 with a single acoustic matching layer 106 is known in the art.

However, as in the conventional construction, when lead wires are connected to the electrodes, after forming an array of electrodes 104 by masking or other means on one side of the compound piezoelectric material 101, in spite of the advantage of high precision forming of electrodes 104 in an array form by employing semiconductor manufacturing technology, it is very difficult in practice to connect lead wires 108 by wire bonding or other means after forming electrodes 104. That is, the compound piezoelectric material 101 is, as mentioned above, made of piezoelectric ceramic material 102 and organic polymer 103 of epoxy resin, and this part is magnified in Fig. 2. More specifically, due to the difference in hardness and coefficient of thermal expansion between the piezoelectric ceramic material 102 and organic polymer 103, the surface of the organic polymer 103 is not flat, but undulated, and it is hard to avoid this roughness. When electrodes 104 are formed on such undulated surface in a thickness of about 1 micron by vacuum evaporation or other means, the electrodes 104 are unevenly formed on the undulated surface of the compound piezoelectric material 101. It is extremely difficult to connect lead wires 108 by wire bonding uniformly and firmly on such non-flat surface. In particular, since wire bonding at the position of organic polymer 103 is difficult, it is required to connect lead wires 108 by wire bonding at the position of piezoelectric ceramic material 102. However, at high frequency, the shape of the piezoelectric ceramic 102 becomes less than 70 microns (7 $\times$ $10^{-5}$m), and wire bonding is barely possible. But when the lead wires 108 are connected by wire bonding at the position of the electrodes 104 which are arranged in a plurality, the strength is lower and reliability is insufficient, or at higher frequency it is hard to connect lead wires 108.

In the case where array-type ultrasonic probes are used, the method of driving by sequentially scanning the transmission and reception signals to be applied to an array comprising a plurality of electrodes 104, and the method of scanning by varing the running direction of the ultrasonic waves by driving, with a very slight time delay, the transmission and reception signal to be applied to a plurality of array of electrodes 104 are known. In these instances it is important that the sound waves may not propagate to the adjacent electrodes when the array of electrodes 104 are driven; that is, the acoustic crosstalk be small, in order to enhance the orientation resolution. However, in such a conventional structure, the acoustic matching layer 106 is not isolated from the plurality of electrodes 104, but made of one continuous plate, and the unnecessary sound waves propagated to the adjacent electrodes 104 from the acoustic matching layer 106, which caused the deterioration of the orientation resolution.

An acoustic impedance matching device for a piezoelectric transducer is disclosed in US-A-4,326,418. The impedance matching window for the ultrasonic transducer comprises a periodic array of stepped structures. Each stepped structure comprises a plurality of parallel matching strips disposed side-by-side on an active surface of a piezoelectric ceramic material. The object is that the frequency response of this structure, which couples wideband pulses from the transducer to, for example, human tissue, should approach a Gaussian response.

## SUMMARY OF THE INVENTION

This invention is intended to solve the above-discussed problems of the conventional ultrasonic probes, and it is hence a primary object of this invention to present an ultrasonic probe capable of connecting to electrical terminals easily and enhancing the reliability.

It is another object of this invention to present an ultrasonic probe capable of enhancing the orientation resolution.

The present invention provides an ultrasonic probe, comprising:

a compound piezoelectric material made of a piezoceramic material and an organic polymer material;

an array of electrodes provided on a first surface of said compound piezoelectric material; and

electrical terminal means connected to said electrodes; characterised in that

said electrical terminal means includes an array of electrical terminals of a pre-determined pattern on a substrate and each of said electrical terminals includes a linkage part at one end thereof and that said electrical terminal means

is adhered to said array of electrodes in such a manner that each of said linkage parts of the electrical terminal member is connected to each of said electrodes in said array of electrodes, and that the formation of said array of electrodes and separation of said linkage part are achieved by dividing them commonly at an intermediate portion between said electrical terminals.

## BRIEF DESCRIPTION OF THE DRAWINGS

Fig. 1 is a perspective view showing a conventional ultrasonic probe made of compound piezoelectric material;

Fig. 2 is a sectional drawing of view A-A' of Fig. 1;

Fig. 3 is a cross sectional view of one of the embodiments of the ultrasonic probe according to the present invention, the ultrasonic probe being made from a compound piezoelectric material;

Fig. 4 is a plan view of the ultrasonic probe shown in Fig. 3;

Figs. 5 to 7 refer to further embodiments of this invention, in which Fig. 5 is a partial perspective view of the ultrasonic probe, Fig. 6 is a sectional view of the ultrasonic probe of Fig. 5, and Fig. 7 is a partial perspective view of the compound piezoelectric material; and

Fig. 8 depicts a still further embodiment of the ultrasonic probe of this invention.

## DETAILED DESCRIPTION OF THE INVENTION

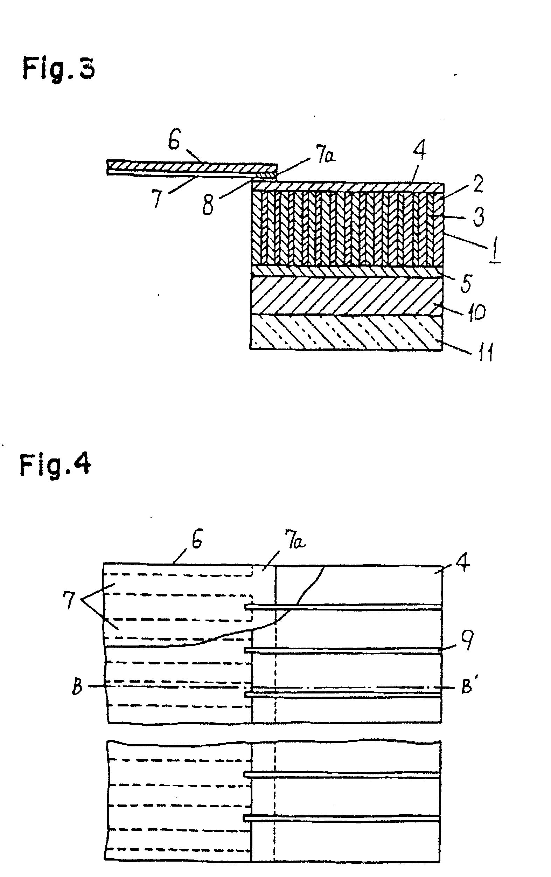

One of the embodiments of this invention is described below while referring to the accompanying drawings. Fig. 3 is a sectional view of the ultrasonic probe of the present invention, and Fig. 4 is a plan view of the ultrasonic probe of Fig. 3. As shown in Fig. 3 which is a sectional diagram of view B-B' in Fig. 4, a compound piezoelectric material 1 is composed of a piezoelectric ceramic material 2 such as PZT, PCM or the like compound extending in one dimension, and a material of low acoustic impedance, such as epoxy resin or other organic polymer material 3, extending in three dimensions thereby surrounding the piezoelectric ceramic material 2. On opposing surfaces of the compound piezoelectric material 1, electrodes 4, 5 are disposed on the entire surface by vacuum deposition, plating or other means. A positive linkage part 7a of electrical terminals 7, such as flexible cables formed in the same pattern as in the desired electrode spacing on a substrate 6, is adhered to the negative part of one of the electrodes 4 of the compound piezoelectric material 3 by solder or other conductor (such as conductive adhesive) 8, and the electrical terminals 7 and electrodes 4 of the compound piezoelectric material 1 are electrically connected. Then, at desired intervals as shown in Fig. 4, grooves 9 are formed in the positive linkage part 7a of electrical terminals and the electrodes 4 of the compound piezoelectric material 1 by means of dicing machine or the like to divide them. Next, as shown in Fig. 3 an acoustic matching layer 10 made of epoxy resin or the like is formed, be pouring in or other means, on the electrode (common electrode) 5, opposite to the electrodes 4 to which the electrical terminals 7 are connected, and an acoustic lens 11 such as silicone rubber is formed on this acoustic matching layer 10 in order to focus the ultrasonic waves as required.

In this way, electrodes 4 are disposed on the whole surface of the compound piezoelectric material 1, and electrical terminals 7 are adhered to part of the electrodes 4 by using conductive adhesive 8 or the like to effect electrical connection, then the electrodes 4 of the compound piezoelectric material 1 and the linkage part 7a of the electrical terminals 7 are divided to form an array. Therefore, the process of masking which is conventionally required to arrange the electrodes in an array form is not needed, if the frequency is made higher and the dimensions of the piezoelectric ceramic material 2 may be reduced so that the electrical terminals 7 can be connected easily, without any problem, even if the electrode spacings of array are very narrow. Moreover, the electrical terminals 7 are formed on the substrate 6 and are high in strength, and they are directly adhered to the electrodes 4, without being coupled with lead wires, to make electrical connection so that the connecting portions of the electrical terminals 7 are very strong, which enhances to reliability. In this embodiment, the electrodes 4 are first disposed on the compound piezoelectric material 1, and then electrical terminals 7 are adhered by means of conductive adhesive 8 or the like to conduct with each other, but in the present invention it is also possible to adhere the electrical terminals 7 to part of the compound piezoelectric material 1 by using an insulating material such as epoxy resin, then install electrodes 4 on the compound piezoelectric material 1, and then vacuum evaporate the electrodes 4 to part of the electrical terminals 7 and compound piezoelectric material 1 to provide electrical connections, and form (by division) the electrodes 4 in an array. Also the above embodiment refers to the application to the so-called array type ultrasonic probe arranged in a linear form, but it is evident that this invention may be also applied to various types of ultrasonic probe, such as two-dimensional array layout ultrasonic probe and arc layout ultrasonic probe.

According to this invention, as clear from the description above, electrodes and electrical terminals to connect to these electrodes are provided on the surface of a compound piezoelectric material, and these electrodes and electric terminals are divided into a number to connect to electrical terminals. Therefore, as the frequency is made higher, the size of the piezoelectric ceramic material of the compound piezoelectric material becomes smaller, and if the resulting electrode spacings in the array become very narrow, the electrical terminals 7 can still be easily connected to the electrodes and the junction of the electrodes 4 and electrical terminals 7 are increased in strength, so that the reliability may be improved.

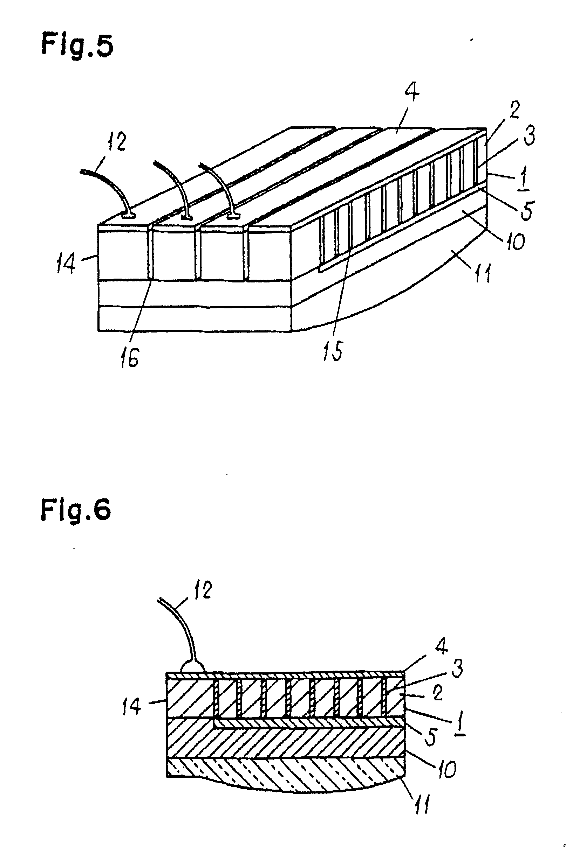

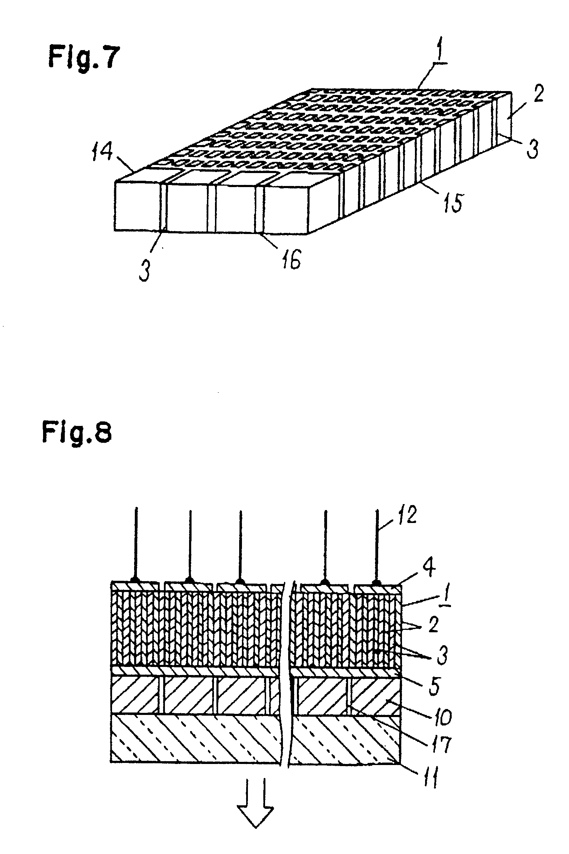

Fig. 5 is a partial perspective view of the ultrasonic probe in another embodiment of the present invention; Fig. 6 is its sectional view; and Fig. 7 is a partial perspective view of the compound piezoelectric material.

As shown in Fig. 5, the compound piezoelectric material 1 is composed of a piezoelectric ceramic material 2 of PZT, PCM or the like compound extending in one dimension, and organic polymer material 3 such as epoxy resin extending in three dimensions adjacent said piezoelectric ceramic material 2. The piezoelectric ceramic material 2 is divided by forming dividing grooves 15 in the form of a grating by a dicing machine or the like, leaving only the electrical terminal connection portion 14 (this portion 14 is also divided by dividing grooves 16 so as to be at same intervals as in the array-shaped electrodes 4 described below). These dividing trenches 15, 16 are filled with organic polymer material 3 which is then hardened. At this time, the organic polymer material 3 should be preferably deformed in vacuum in order to fill uniformly with few bubbles. The piezoelectric ceramic material 2 and organic polymer material 3 are machined to a thickness of desired frequency by polishing or other means, and make up the compound piezoelectric material 1. Therefore, since the electrical terminal connection portion 14 is almost completely made of piezoelectric ceramic material, it does not have function as compound piezoelectric material. As shown in Figs. 5 and 6, on one surfaced of the compound piezoelectric material 1, a plurality of array-formed electrodes 4 are provided by vacuum evaporation or similar method by way of mask or the like and spaced apart by dividing grooves 16. On the other surface, a common electrode 5 is provided, by vacuum evaporation or other method, excluding the electrical terminal connection portion 14. On the free surface of the common electrode 5, an acoustic matching layer 10 of epoxy resin or the like of thickness equal to 1/4 wavelength of the vibrational signals is provided by adhering or pouring. Furthermore, as required, an acoustic lens 11 of silicone rubber or the like is provided by adhering or pouring out the free surface of matching layer 10. Acoustic lens 11 is provided in order to focus ultrasonic waves on the outside of the acoustic matching layer 10. To the plurality of electrodes 4 arranged in an array, the electrical terminals 12 are connected by wire bonding or other means from the positions corresponding to the electric terminal connection portion 14.

Thus, since the electric terminal connection portion 14 is made of piezoelectric ceramic material 2 almost completely when fabricating the compound piezoelectric material 1, the electrical terminals 12 may be easily and firmly connected by wire bonding or other method. Therefore, the reliability is high. In addition, since common electrode 5 is not provided at the position corresponding to the electrical terminal connection portion 14 on the opposite side of the array-formed electrodes 4 in the compound piezoelectric material 1, this portion does not vibrate. That is, since only the compound piezoelectric material 1 other than the electrical terminal connection portion 14 vibrates, the desired ultrasonic beam may be obtained. Furthermore, since electrical terminal connection portion 14 of the piezoelectric ceramic material 2 is divided at the same intervals as in the array of electrodes 4, acoustic crosstalk to the adjacent elements may be reduced, so that an ultrasonic resolution high in orientation resolution may be obtained.

In the embodiment described above, firstly the electrical terminal connection portion 14 of the piezoelectric ceramic material 2 was divided at the same intervals as in the array of electrodes 4, and then arrays of electrodes 4 were evaporated by using mask or the like, but other methods may be applicable. For example, electrodes for forming an array of electrodes 4 may be provided on the whole surface on one surface of the compound piezoelectric material 1 having electrical terminal connection portion 14, and a common electrode 5 provided on the other side. Then an acoustic matching layer 10 is disposed on this common electrode 5, and the electrodes and compound piezoelectric material 1 then divided into arrays by dicing machine or the like to compose arrays of electrodes 7, and finally the electrical terminals 12 are connected by wire bonding or other method. Alternatively in a similar manner to the embodiment shown in Figs. 3 and 4, it may also be possible to provide electrodes for forming arrays of electrodes 4 on the whole of one surface of the compound piezoelectric material 1 having electrical terminal connection portion 14, to dispose a common electrode 5 on the other surface to install an acoustic matching layer 10 on this common electrode 5, to provide plate-shaped terminals as plate-shaped electric terminals 11, by soldering or by using conductive adhesive, on the electrodes at the position corresponding to the electrical terminal connection portion 14 of the compound piezoelectric material 1, and to divide the electrical-terminals, electrodes, and compound piezoelectric material 1 into arrays, thereby connecting the electric terminals 11.

The above described embodiments refer to applications of the so-called array type ultrasonic probe arranged in a linear form, but it is evident that the present invention may be equally applied to other types of ultrasonic probe, such as two-dimensional layout ultrasonic probe and arc layout ultrasonic probe.

Thus, in the embodiment shown in Fig. 7, the electrical terminal connection portion is provided in the piezoelectric ceramic material of the compound piezoelectric material, and arrays of electrodes are provided on one surface of this compound piezoelectric material, while a common electrode is provided on the other surface, and the electrical terminals are connected from the arrays of the electrodes at the position corresponding to the electrical material connection portion. Therefore, as the frequency is increased, if the size of piezoelectric ceramic material 2 of the compound piezoelectric material 1 is reduced or the spacing of electrodes in the arrays are narrowed, the electrical terminals can still be connected easily. Moreover, since the electrical terminal connection portion is high in strength, the reliability may be enhanced.

Fig. 8 is a sectional view of an ultrasonic probe in a further embodiment of the present invention, in which the compound piezoelectric material 1 is made of a piezoelectric ceramic material 2 of PZT, PCM or the like compound extending in one dimension and an organic polymer 3 such as epoxy resin extending in three dimensions adjacent the piezoelectric ceramic material 2. If, for example, the PZT compound piezoelectric ceramic material 2 and organic polymer 3 made of epoxy resin are used in the quantities 25% and 75% by volume, respectively, then the acoustic impedance is $8 \times 10^5$ g/cm$^2$.s. On one surface of this compound piezoelectric material 1, a plurality of electrodes 4 are arranged at specified intervals, while a common electrode 5 is formed on the other surface by vacuum deposition or other process. On this common electrode 5, an acoustic matching layer 10 of thickness equal to 1/4 of wavelength of the vibrational signals is formed by adhering or pouring. Supposing the subject is a human body (of which acoustic impedance is 1.5 to $1.8 \times 10^5$ g/cm$^2$.s), the suited acoustic impedance of the acoustic matching layer 10 is about 3 to $4 \times 10^5$ g/cm$^2$.s,

and the material having this value is epoxy resin, and epoxy resin is used in the acoustic matching layer 10 is divided by forming dividing grooves 17 by dicing machine or the like at the same intervals as those of the electrodes 4. On the free surface of divided acoustic matching layer 10, an acoustic lens 11 of silicone rubber or similar material is formed by adhering or pouring in order to focus ultrasonic waves, and the dividing grooves 17 of each acoustic matching layer 10 are filled with adhesive or similar material as acoustic lens 11. As the material to fill up the dividing grooves 17 of the acoustic matching layer 10, any substance which has a greatly different acoustic impedance to the acoustic matching layer 10 and has a high ultrasonic damping factor may be used, such as a blend of silicone rubber and micro-balloons.

Thus, by dividing the acoustic matching layer 10 at the same intervals as the electrodes 4 arranged in a plurality on the compound piezoelectric material 1, propagation of sound waves to adjacent electrodes 4 can be prevented, and it is evident that the acoustic crosstalk can be notably decreased. Therefore, an ultrasonic wave picture high in orientation resolution may be obtained.

In the embodiment shown in Fig. 8, first the acoustic matching layer 10 is formed on the compound piezoelectric material 1 by adhering or pouring, and is then divided. But it is also possible to preliminarily form the acoustic matching layer 10 on the compound piezoelectric material 1 by adhering or pouring, to divide the acoustic matching layer 10, leaving about 1/10 of thickness remaining or removing completely, at the same intervals (spacing) as the plurality electrodes 4 arranged in an array on the compound piezoelectric material 1, to fill the dividing grooves 7 with silicone rubber or similar material, and to adhere on the common electrode plane 5 of the compound piezoelectric material 1.

In the embodiment shown in Fig. 8, the acoustic matching layer provided at the sound wave transmission and reception surface of the compound piezoelectric material which transmits and receives ultrasonic waves is divided at the same intervals (spacing) as the plurality of electrodes disposed at specified intervals (spacings) on the surface opposite to the sound wave transmission and reception surface of the compound piezoelectric material. Therefore, acoustic crosstalk to the adjoining electrode parts can be sizably decreased, and an ultrasonic probe possessing a high orientation resolution performance may be obtained.

**Claims**

1. An ultrasonic probe, comprising:
a compound piezoelectric material (1) made of a piezoceramic material (2) and an organic polymer material (3);
an array of electrodes (4) provided on a first surface of said compound piezoelectric material (1); and
electrical terminal means (6, 7) connected to said electrodes (4); characterised in that
said electrical terminal means (6, 7) includes an array of electrical terminals (7) of a pre-determined pattern on a substrate (6) and each of said electrical terminals (7) includes a linkage part (7a) at one end thereof and that said electrical terminal means (6, 7) is adhered to said array of electrodes in such a manner that each of said linkage parts (7a) of the electrical terminal member (6, 7) is connected to each of said electrodes in said array of electrodes (4), and that the formation of said array of electrodes (4) and separation of said linkage part (7a) are achieved by dividing said electrodes and linkage parts commonly at an intermediate portion between said electrical terminals (7).

2. The ultrasonic probe according to claim 1, wherein a common electrode (5) is formed on a second surface of said compound piezoelectric material (1), opposite said first surface and an acoustic matching layer (10) and an acoustic lens (11) are provided thereon.

3. The ultrasonic probe according to claim 1, wherein said piezoelectric ceramic material (2) is a two-component piezoelectric material (PZT) or a three-component piezoelectric material (PCM) oriented in a direction perpendicular to said first surface, and said organic polymer material (3) is an epoxy resin which surrounds said piezoelectric ceramic material, and both are used in a ratio of 1:3 by volume.

4. The ultrasonic probe according to claim 1, wherein an electric terminal connection portion (14) made of piezoelectric ceramic material is provided adjacent to said compound piezoelectric material, (1) on said first surface of which said electrodes (4) are provided and said electric terminals (7 or 12) are connected to said electrodes (4) at a position corresponding to said electric terminal connecting portion (14).

5. The ultrasonic probe according to claim 4, wherein said piezoelectric ceramic material of said electrical terminal connection position (14) is divided by dividing trenches (16), said dividing trenches occurring at the same intervals as the spacings between said electrodes (4), and the dividing trenches (16) are filled with organic polymer material.

6. The ultrasonic probe according to claim 4, wherein no electrode is provided on the surface opposite to that of said electric terminal connection portion (14).

7. The ultrasonic probe according to claim 2, wherein said acoustic matching layer (10) is divided by dividing trenches (17), said dividing trenches occurring at the same intervals as the spacings between said electrodes (4), and the dividing trenches are filled with a material having a different acoustic impedance from that of said acoustic matching layer (10).

## Revendications

1. Sonde ultrasonore, comprenant :
   un matériau piézoélectrique composite (1) formé d'un matériau céramique piézoélectrique (2) et d'un matériau polymère organique (3),
   une matrice d'électrodes (4) disposée sur une première surface du matériau piézoélectrique composite (1), et
   un dispositif (6, 7) à bornes électriques connecté aux électrodes (4), caractérisée en ce que
   le dispositif (6, 7) à bornes électriques comporte une matrice de bornes électriques (7) formant un dessin prédéterminé sur un substrat (6) et chacune des bornes électriques (7) comporte une partie de liaison (7a) placée à une première extrémité, et en ce que le dispositif (6,7) à bornes électriques est collé à la matrice d'électrodes de manière que chaque partie de liaison (7a) du dispositif (6, 7) à bornes électriques soit connectée à chaque électrode de la matrice d'électrodes (4), et en ce que la formation de la matrice d'électrodes (4) et la séparation de la partie de liaison (7a) sont réalisées par division des électrodes et des parties de liaison de manière commune dans une partie intermédiaire, entre les bornes électriques (7).

2. Sonde ultrasonore selon la revendication 1, dans laquelle une électrode commune (5) est formée sur une seconde surface du matériau piézoélectrique composite (1), opposée à la première surface, et une couche d'adaptation acoustique (10) et une lentille acoustique (11) sont formées sur cette surface.

3. Sonde ultrasonore selon la revendication 1, dans laquelle le matériau céramique piézoélectrique (2) est un matériau piézoélectrique à deux constituants (PZT) ou à trois constituants (PCM) orienté en direction perpendiculaire à la première surface, et le matériau polymère organique (3) est une résine époxyde qui entoure le matériau céramique piézoélectrique, et ils sont utilisés dans un rapport volumique de 1/3.

4. Sonde ultrasonore selon la revendication 1, dans laquelle une partie (14) de connexion de bornes électriques formées d'un matériau céramique piézoélectrique est disposée près du matériau piézoélectrique composite (1) à la première surface duquel les électrodes (4) sont disposées, et les bornes électriques (7 ou 12) sont connectées aux-dites électrodes (4) à un emplacement correspondant à la partie (14) de connexion de bornes électriques.

5. Sonde ultrasonore selon la revendication 4, dans laquelle le matériau céramique piézoélectrique de la partie (14) de connexion de bornes électriques est divisé par des rigoles (16) qui ont les mêmes intervalles que les espaces des électrodes (4) et les rigoles de division (16) sont remplies d'un matériau polymère organique.

6. Sonde ultrasonore selon la revendication 4, dans laquelle aucune électrode n'est placée à la surface opposée à celle de la partie de connexion de bornes électriques (14).

7. Sonde ultrasonore selon la revendication 2, dans laquelle la couche d'adaptation acoustique (10) est divisée par des rigoles (17), les rigoles de division ayant les mêmes intervalles que les espaces formés entre les électrodes (4) et les rigoles de division sont remplies d'un matériau ayant une impédance acoustique différente de celle de la couche d'adaptation acoustique (10).

## Ansprüche

1. Ultraschallsonde
   mit einem aus piezokeramischem Material (2) und einem organischen Polymer (3) zusammengesetzten, piezoelektrischen Material (1)
   mit einer Anordnung von auf einer Außenfläche des zusammengesetzten, piezoelektrischen Materials (1) vorgesehenen Elektroden (4) und

mit Anschlußstücken (6, 7), die mit den Elektroden (4) verbunden sind,

dadurch gekennzeichnet, daß die elektrischen Anschlußstücke (6, 7) auf einer Unterlage (6) eine Anordnung elektrischer Anschlußleisten (7) in einer vorherbestimmten Verteilung und an einem Ende jeder elektrischen Anschlußleiste (7) eine Gliedverbindung (7a) enthalten, und daß die elektrischen Anschlußstücke (6, 7) an der Anordnung der Elektroden in solch einer Weise befestigt sind, daß jede der Gliedverbindungen (7a) der elektrischen Anschlußstücke (6, 7) mit jeder der Elektroden in der Anordnung von Elektroden (4) verbunden ist, und daß die Ausbildung der Anordnung von Elektroden (4) und eine Trennung der Gliedverbindung (7a) dadurch erzielt sind, daß die Elektroden und die Gliedverbindungen gemeinsam an einem Zwischenabschnitt zwischen den elektrischen Anschlußleisten (7) zerteilt sind.

2. Ultraschallsonde gemäß Anspruch 1, bei der auf einer weiteren Außenfläche des zusammengesetzten, piezoelektrischen Materials (1) entgegengesetzt zu der ersten Außenfläche eine gemeinschaftliche Elektrode (5) ausgebildet ist, auf der eine akustisch zusammenpassende Schicht (10) und eine akustische Linse (11) vorgesehen sind.

3. Ultraschallsonde gemäß Anspruch 1, bei der das piezoelektrische, keramische Material (2) ein aus zwei Komponenten bestehendes,piezoelektrisches Material (PZT) oder ein aus drei Komponenten bestehendes, piezoelektrisches Material (PCM) ist, das senkrecht zu der ersten Außenfläche orientiert ist, und das organische Polymer (3) ein Epoxyharz ist, das das piezoelektrische, keramische Material umgibt, und die beiden Stoffe in einem Volumenverhältnis von 1:3 benutzt sind.

4. Ultraschallsonde gemäß Anspruch 1, bei der ein aus piezoelektrischem, keramischem Material hergestellter Verbindungsabschnitt (14) des elektrischen Anschlußstückes neben dem zusammengesetzten, piezoelektrischen Material (1) vorgesehen ist, auf dessen erster Außenfläche die Elektroden (4) vorgesehen sind, und die elektrischen Anschlußstücke (7 oder 12) mit den Elektroden (4) an einer Stelle verbunden sind, die dem Verbindungsabschnitt (14) des elektrischen Anschlußstückes entspricht.

5. Ultraschallsonde gemäß Anspruch 4, bei der das piezoelektrische, keramische Material des Verbindungsstückes (14) des elektrischen Anschlußstückes durch teilende Trennfurchen (16) unterteilt ist, die in denselben Intervallen wie die Abstände zwischen den Elektroden (4) auftreten und mit einem organischen Polymer gefüllt sind.

6. Ultraschallsonde gemäß Anspruch 4, bei der auf der Außenfläche, die der des Verbindungsabschnittes (14) des elektrischen Anschlußstückes gegenüberliegt, keine Elektrode vorgesehen ist.

7. Ultraschallsonde gemäß Anspruch 2, bei der die akustisch zusammenpassende Schicht (10) durch Trennfurchen (17) unterteilt ist, die in denselben Intervallen wie die Abstände zwischen den Elektroden (4) auftreten, und die Trennfurchen mit einem Material gefüllt sind, dessen akustische Impedanz sich von der der akustisch zusammenpassenden Schicht (10) unterscheidet.

# Fig. 1

# Fig. 2

# Fig.3

# Fig.4

# Fig.5

# Fig.6

## Fig.7

**14** **1** **2** **3** **15** **3** **16**

## Fig.8

**12** **4** **1** **2** **3** **5** **10** **17** **11**